# EUROPÄISCHE PATENTSCHRIFT

(11) **EP 2 734 998 B1**
(45) Veröffentlichungstag und Bekanntmachung des Hinweises auf die Patenterteilung: **21.06.2017**
(21) Anmeldenummer: 12746043.4
(22) Anmeldetag: 19.07.2012
(51) Int. Cl.: G08G 5/00, G10L 15/22, G10L 15/183

(54) **ASSISTENZSYSTEM**
ASSISTANCE SYSTEM
SYSTÈME D'ASSISTANCE

(30) Priorität: 19.07.2011 DE 102011107934; 06.03.2012 US 201261607167 P
(43) Veröffentlichungstag der Anmeldung: 28.05.2014
(73) Patentinhaber: Deutsches Zentrum für Luft- und Raumfahrt e.V., 51147 Köln (DE); Universität des Saarlandes, 66123 Saarbrücken (DE)
(72) Erfinder: RATAJ, Juergen, 38536 Meinersen (DE); FAUBEL, Friedrich, 66121 Saarbrücken (DE); HELMKE, Hartmut, 38108 Braunschweig (DE); KLAKOW, Dietrich, 66125 Saarbrücken (DE)
(74) Vertreter: Aisch, Sebastian
(86) Internationale Anmeldenummer: PCT/EP2012/064186
(87) Internationale Veröffentlichungsnummer: WO 2013/011090

(56) Entgegenhaltungen:
- US-A- 5 652 897
- KIRK A. DUNKELBERGER: "Real-time speech gisting for ATC applications", PROCEEDINGS OF SPIE, Bd. 2464, 12. Juni 1995 (1995-06-12), Seiten 149-157, XP055050935, ISSN: 0277-786X, DOI: 10.1117/12.211486
- Dirk Schaefer: "Context-Sensitive Speech Recognition in the Air Traffic Control Simulation", , 1. Februar 2001 (2001-02-01), XP055050962, Gefunden im Internet: URL:http://www.eurocontrol.int/eec/gallery /content/public/document/eec/report/2001/0 04_Context-sensitive_Speech_Recognition.pd f [gefunden am 2013-01-24]
- HARTMUT HELMKE ET AL: "Time-Based Arrival Management for Dual Threshold Operation and Continous Descent Approaches", EIGHTH USA/EUROPE AIR TRAFFIC MANAGEMENT RESEARCH AND DEVELOPMENT SEMINAR (ATM2009), 1. Januar 2009 (2009-01-01), XP055050969,
- Reiner Onken: "Functional Development and field test of CASSY - a knowledge-based cockpit assistant system", AGARD-LS-200 - Knowledge-Based Functions in Aerospace Systems, 1 November 1995 (1995-11-01), pages 4-1-4-22, XP055165350, Retrieved from the Internet: URL:http://ftp.rta.nato.int/public//PubFul lText/AGARD/LS/AGARD-LS-200///AGARD-LS-200 .pdf [retrieved on 2015-01-27]
- Herman Vandevenne ET AL: "Evaluation ofRunway- Assignment and Aircratt- Sequencing Algorithms in Terminal Area Automation", , 1 January 1994 (1994-01-01), XP055330263, Retrieved from the Internet: URL:https://www.ll.mit.edu/mission/aviatio n/publications/publication-files/journal-a rticles/Vandevenne_1994_JA-7277.pdf [retrieved on 2016-12-19]

## Beschreibung

Die Erfindung betrifft ein Lotsenunterstützungssystem zur Unterstützung eines Lotsen bei situationsabhängigen Planungs- und/oder Führungsaufgaben einer Regelstrecke bei der Führung eines Flugzeuges durch einen Lotsen. Die Erfindung betrifft ebenso ein Verfahren hierzu.

Durch den weiter steigenden Grad der Automation in fast allen Lebensbereichen kommen vermehrt immer mehr Assistenzsysteme zum Einsatz, die ganz oder nur in Teilbereichen die Planungs- und/oder Führungsaufgaben unterstützen oder sogar vollständig übernehmen sollen, um die mit der Planungs- und/oder Führungsaufgabe beauftragten Personen zu entlasten und die Sicherheit zu erhöhen.

In den meisten Fällen sind die Assistenzsysteme dabei derart eingerichtet, dass ein oder mehrere Zustände bezüglich der Regelstrecke durch das Detektieren von Merkmalen der Regelstrecke, wie beispielsweise Parameter der Regelstrecke, Messwerte, Objekte und/oder Umgebungsmerkmale erfasst werden. Hierzu sind die Assistenzsysteme mit einer Reihe von Sensorsystemen oder Datenbanken verbunden, aus denen die für die Erfassung des Zustandes notwendigen Informationen abgreifbar sind. Dadurch kann das Assistenzsystem ein maschinelles Situationsbewusstsein aufbauen, um daraus dann entsprechende Unterstützungsmaßnahmen für die betreffenden Personen z.B. auf Basis von Strategien und Zielen ableiten oder eine vollautomatisierte Regelung durchführen zu können.

Nicht selten kommt es bei derartigen Regelungskreisläufen vor, dass von den für die Planungs- und/oder Führungsaufgabe beauftragten Personen Handlungsanweisungen gegeben werden, die sich auf die Regelstrecke erst zeitverzögert auswirken, so dass die nachgeschalteten Assistenzsysteme, die mit Hilfe ihrer angeschlossenen Sensorik den aktuellen Zustand der Regelstrecke versuchen zu erfassen, eine solche Veränderung ebenfalls zeitverzögert feststellen. In der Zwischenzeit geben die Assistenzsysteme jedoch Handlungsempfehlungen an die Personen, die auf alten Informationen über den Zustand der Regelstrecke beruhen, so dass die Ablehnung derartiger Assistenzsystem dadurch gefördert wird. Sollen die Assistenzsysteme zumindest auch teilweise selbstständig Handlungsaufgaben übernehmen, so kann dies mit unter schwerwiegende Folgen haben, wenn eine Situationsveränderung nicht rechtzeitig erkannt und mit einbezogen wird. Insbesondere bei Regelstrecken, bei denen von außen durch den Menschen noch eingegriffen werden kann, besteht hier eine besondere Gefahr.

### Stand der Technik

Aus der DE 10 2009 034 069 A1 ist eine Bedienvorrichtung für ein Kraftfahrzeug bekannt, das ein Display zur Darstellung veränderlicher Informationen aufweist. Mit Hilfe einer Blickrichtungserkennungseinheit kann die Blickrichtung des Kraftfahrzeugführers ermittelt werden, wobei die Bedienvorrichtung mit Hilfe von akustischen Befehlen bedient werden kann, wenn die Blickrichtung des Kraftfahrzeugführers auf das Display gerichtet ist.

In KIRK A. DUNKELBERGER: "Real-time speech gisting for ATC applications", PROCEEDINGS OF SPIE, Bd. 2464, 12. Juni 1995, Seite 149-157, XP055050935, ISSN: 0277-786X, wird ein Spracherkennungssystem offenbart, bei dem insbesondere die Sprachkommunikation zwischen Pilot und Lotse analysiert und die entsprechenden Sprachbefehle erkannt werden sollen. Dabei wird zur Unterstützung der Spracherkennung die vorliegende Situation mit berücksichtigt, um so die Erkennung in Bezug auf die Situation verbessern zu können.

Aus der US 5,652,897 ist ebenfalls ein Spracherkennungssystem bekannt, bei dem separat die Sprachkommunikation erfasst und entsprechend mithilfe eines "speech recognizer" und "language understanding modules" die Sprache erfasst wird. Die so verstandene Sprache wird dann einem "expert system" zur Verfügung gestellt, so dass die aus der Sprache stammenden Informationen in die Informationen bezüglich der Sensordaten mit eingebaut werden können.

Aus Reiner Onken: "Functional Development and field test of CASSY - a knowledge-based cockpit assistant system", AGARD-LS-200 - Knowledge-Based Functions in Aerospace Systems, 1. November 1995, Seite 4-1-4-22, ist bekannt, Steuerbefehle eines Flugzeugassistenzsystems mithilfe von Sprachbefehlen einzugeben, wobei hier der Kontext der Spracherkennung anhand der Flugsituation festgelegt wird.

### Aufgabe

Aufgabe der vorliegenden Erfindung ist es, ein verbessertes Assistenzsystem zur Unterstützung bei situationsabhängigen Planungs- und/oder Führungsaufgaben einer Regelstrecke zu schaffen, das schnell auf sich verändernde Zustände oder Situationen der Regelstrecke reagieren kann, ohne das Bedienpersonal zusätzlich zu belasten.

### Lösung

Die Aufgabe wird mit dem Lotsenunterstützungssystem gemäß Anspruch 1 sowie dem Verfahren gemäß Anspruch 8 gelöst. Es ist eine akustische Aufnahmeeinheit, die zum Aufnehmen von akustischen Sprachsignalen einer Sprachkommunikation zwischen mindestens zwei Personen ausgebildet ist, und eine Sprachverarbeitungseinheit, die zum Erkennen von Sprachinformationen bezüglich der Regelstrecke aus den aufgenommenen akustischen Sprachsignalen eingerichtet ist, vorgesehen, wobei die Zustandserfassungseinheit zum Anpassen des erfassten Zustandes und/oder eines aus dem aktuellen Zustand ableitbaren prognostizierten Zustandes der Regelstrecke in Abhängigkeit von den erkannten Sprachinformationen eingerichtet ist, und wobei eine Sprachhypotheseneinheit vorgesehen ist, die zum Ermitteln von Sprachhypothesen bezüglich zukünftig erwarteter Sprachinformationen in Abhängigkeit von dem erfassten Zustand und/oder einem aus dem aktuellen Zustand ableitbaren prognostizierten Zustand ausgebildet ist, wobei die Sprachverarbeitungseinheit zum Erkennen der Sprachinformationen bezüglich der Regelstrecke aus den aufgenommenen akustischen Sprachsignalen unter Berücksichtigung der ermittelten Sprachhypothesen eingerichtet ist.

Kerngedanke der vorliegenden Erfindung ist es, dass das Lotsenunterstützungssystem mit Hilfe einer akustischen Aufnahmeeinheit akustische Sprachsignale einer Sprachkommunikation zwischen zwei Personen, insbesondere zwischen Personen, die auf die Regelstrecke einwirken können, aufnimmt und diese mit Hilfe einer Sprachverarbeitungseinheit, die Sprachhypothesen verwendet, analysiert und mit den selbst entwickelten Hypothesen vergleicht. Dabei können entsprechende Sprachinformationen bezüglich der Regelstrecke aus den aufgenommenen akustischen Sprachsignalen erkannt werden, so dass der erfasste Zustand und/oder ein aus dem aktuellen Zustand der Regelstrecke insbesondere durch Planung ableitbarer prognostizierter Zustand in Abhängigkeit von den erkannten Sprachinformationen angepasst werden kann. Der Vergleich der von der Maschine entwickelten zukünftigen Situationshypothesen mit den durch Spracherkennung erkannten Handlungsanweisungen für die zukünftige Situation kann zur Anpassung der Strategien und Ziele im Assistenzsystem an die des Operateurs genutzt werden.

Somit kann das Lotsenunterstützungssystem wesentlich schneller auf sich verändernde Situationen oder Zustände reagieren, ohne dabei Gefahr laufen zu müssen, in den "Out-of-the-Loop"-Zustand zu geraten. Das Lotsenunterstützungssystem kann somit z.B. auf Basis von Anweisungen eines Operateurs ohne physikalische Veränderungen zu diesem Zeitpunkt besser auf zukünftige, sich verändernde Zustände reagieren, auch wenn nach der Anweisung des Lotsen in der realen Welt noch nichts passiert ist. Ohne das entsprechende Vorgänge eingeleitet wurden, erfolgt somit eine Vorwegnahme des physikalisch Vorgegebenen.

Die Erfassung zumindest eines Zustandes der Regelstrecke durch die Zustandserfassungseinheit kann durch ein mit der Zustandserfassungseinheit in Verbindung stehenden ersten Sensorsystem erfolgen, wie sie generell für die Überwachung von Regelstrecken verwendet werden, wie beispielsweise Radarsensoren, Ortungseinheiten, Temperatursensoren, etc. Aus den erfassten Daten der Sensorik lässt sich dann der aktuelle Zustand der Regelstrecke erfassen. Unter Kenntnis des aktuellen Zustandes der Regelstrecke gegebenenfalls in Verbindung mit der Kenntnis von zu erreichenden Zielen lässt sich darüber hinaus auch ein prognostizierter Zustand für die Zukunft ableiten, der eine Prognose für die Entwicklung der Zustände der Regelstrecke angibt. Dadurch lässt sich ableiten, wie sich ein Zustand zukünftig entwickelt.

Denn durch das Mithören bei der Sprachkommunikation von Menschen, die in den Arbeitsprozess der Regelstrecke eingebunden sind, können frühzeitig veranlasste Zustandsänderungen auf der Regelstrecke erkannt werden, so dass der erfasste sowie der erwartete Zustand entsprechend frühzeitig angepasst werden kann. Die von dem Lotsenunterstützungssystem abgeleiteten Handlungsempfehlungen bezüglich der Regelstrecke sind aufgrund der frühzeitigen Anpassung des Zustandes bzw. eines prognostizierten Zustandes wesentlich genauer und auf die Situation wesentlich besser abgestimmt, so dass die Unterstützungsqualität derartiger Lotsenunterstützungssysteme erheblich verbessert wird. Die Situation der Regelstrecke bezieht sich somit auf einen zukünftig erwarteten Zustand.

Um die Erkennungsrate der Spracherkennung weiter zu erhöhen, werden mittels einer Sprachhypotheseneinheit in Abhängigkeit von dem erfassten oder prognostizierten Zustand der Regelstrecke Sprachhypothesen über zukünftig zu erwartende Sprachinformationen ermittelt. Durch das Ermitteln von Hypothesen bezüglich zukünftiger Sprachinformationen lässt sich dann die Erkennung der Sprachinformationen in Abhängigkeit dieser Hypothesen durchführen. Der von dem erfassten oder prognostizierten Zustand abgeleitete Sprachkontext kann somit um Hypothesen über zukünftige Sprachinformationen oder Sprachkontexte erweitert werden, was sich höchst positiv auf die Erkennungsrate auswirkt.

Dabei stellen die akustischen Sprachsignale keine direkte Anweisung in Form einer Gerätebedienung an das Lotsenunterstützungssystem dar, sondern sind Teil einer Sprachkommunikation zwischen zwei Personen. Durch das lautlose Mithören des Lotsenunterstützungssystems während der Sprachkommunikation ist es für die betroffenen Personen nicht erforderlich, das Lotsenunterstützungssystem auf eine Spracheingabe vorzubereiten. Dadurch wird eine deutliche Entlastung bei der Planungs- und/oder Führungsaufgabe durch die Personen erreicht. Die akustische Aufnahmeeinheit in Verbindung mit der Sprachverarbeitungseinheit bilden somit ein weiteres, zweites Sensorsystem für die Erfassung oder Prognose des Zustandes der Regelstrecke. Die Erfindung ist somit dadurch gekennzeichnet, dass die akustische Aufnahmeeinheit und die Sprachverarbeitungseinheit als ein zweites Sensorsystem vorgesehen sind.

Ganz besonders vorteilhaft ist es nun, wenn zu den ermittelten Sprachhypothesen zusätzlich Eintrittswahrscheinlichkeiten zugeordnet werden, die das Eintreffen dieser Hypothese mit einer gewissen Wahrscheinlichkeit prognostizieren. Die Hypothesen stellen dabei eine Möglichkeit, ausgehend von dem aktuellen oder prognostizierten Zustand, für das Auftreten von bestimmten Sprachinformationen dar, die sich mit einer gewissen Wahrscheinlichkeit für die erfasste Situation ergeben könnten.

Durch die Sprachhypothesen und die den Sprachhypothesen zugeordneten Eintrittswahrscheinlichkeiten lässt sich dabei die Genauigkeit der Spracherkennung signifikant erhöhen, da nunmehr bezüglich des Kontextes der erfassten Situation die Spracherkennung auf den wesentlichen Teil gerichtet werden kann.

Vorteilhafterweise erfolgt die Erkennung der Sprachinformationen durch die Sprachverarbeitungseinheit aus den aufgenommenen akustischen Sprachsignalen in Abhängigkeit von einem Kontext, der aus dem erfassten oder prognostizierten Zustand ermittelt werden kann. Da das Lotsenunterstützungssystem den Kontext für die Erkennung von Sprachinformationen liefert, kann dadurch signifikant die Erkennungsrate bei der Spracherkennung erhöht werden, insbesondere dann, wenn eine kontextbasierte Spracherkennung eingesetzt wird. Der Kontext des erfassten Zustandes kann dabei aus den Hypothesen des Lotsenunterstützungssystems durch Verwendung des vorhandenen Situationswissens über die Regelstrecke unter Nutzung der Sensordaten und Datenbanken abgeleitet werden.

In einer vorteilhaften Ausführungsform ist das Lotsenunterstützungssystem derart eingerichtet, dass die Aufnahmeeinheit zum Empfangen von elektrischen Signalen einer elektrischen Sprach-Kommunikationsverbindung und zum Aufnehmen der akustischen Sprachsignale aus den empfangenen elektrischen Signalen eingerichtet ist. Dies ist besonders dann vorteilhaft, wenn die Kommunikation zwischen den Personen über eine elektrische Sprach-Kommunikationsverbindung erfolgt, beispielsweise über Funk oder über ein Telefonnetzwerk.

Darüber hinaus weist das Lotsenunterstützungssystem in einer weiteren vorteilhaften Ausgestaltung eine Ausgabeeinheit auf, die zum Ausgeben von generierten Unterstützungsanweisungen zum Unterstützen der situationsabhängigen Planungs- und/oder Führungsaufgabe der Regelstrecke eingerichtet ist, wobei die Unterstützungsanweisungen aus dem erfassten oder prognostizierten Zustand abgeleitet werden können. Eine derartige Ausgabeeinheit kann beispielsweise ein Display sein, auf dem Handlungsanweisungen für eine Person dargestellt werden. Die Ausgabeeinheit kann aber auch mit einer Steuerungseinrichtung verbunden sein, um direkt auf Stellgrößen der Regelstrecke zugreifen und so zumindest teilweise autonom auf die Regelstrecke einwirken zu können, wodurch ein zumindest teilweiser automatischer Betrieb ermöglicht wird.

In einer weiteren vorteilhaften Ausführungsform ermittelt das Lotsenunterstützungssystem Handlungsoptionen zur Unterstützung der situationsabhängigen Planungs- und/oder Führungsaufgabe der Regelstrecke, beispielsweise in Form von Unterstützungsanweisungen. Diese Handlungsoptionen werden anhand des erfassten Zustandes und/oder des aus dem aktuellen Zustand ableitbaren prognostizierten Zustandes der Regelstrecke ermittelt und geben so mögliche Handlungsoptionen zum Einwirken auf die Regelstrecke vor. Dabei führen die Handlungsoptionen zu verschiedenen prognostizierten Zuständen und stehen somit in Wechselwirkung zueinander. Aus diesen Handlungsoptionen lassen sich dann mit Hilfe der Sprachhypotheseneinheit Sprachhypothesen bezüglich zukünftig zu erwartender Sprachinformationen ermitteln, so dass die Spracherkennung, mit deren Hilfe Sprachinformationen zur Anpassung des erfassten oder prognostizierten Zustandes ermittelt werden sollen, verbessern, da nun aus dem Zustand ermittelte Handlungsoptionen zur Grundlage der Sprachhypothesen gemacht werden. Dabei kann die Spracherkennung von zuvor 75% Erkennungsrate auf bis zum 95% gesteigert werden.

Hierbei ist es nun ganz besonders vorteilhaft, wenn zusätzlich die Handlungsoptionen aus den bereits erkannten Sprachinformationen ermittelt werden, wodurch nur noch die Handlungsoptionen betrachtet werden brauchen, die in Bezug auf die Sprachinformationen wahrscheinlich sind. Denn durch die bekannten Sprachinformationen wird der Zustand bezüglich der Regelstrecke angepasst, wodurch Handlungsoptionen, die nunmehr unwahrscheinlich oder keinen Sinn mehr machen, unberücksichtigt bleiben können.

Hierdurch wird es möglich, dass nicht nur die Spracherkennung verbessert wird, sondern auch die Akzeptanz derartiger Assistenzsysteme, da die bereitgestellten Handlungsoptionen wesentlich genauer auf den Zustand der Regelstrecke angepasst sind.

Dies ist ein vorzugsweise interaktives Vorgehen, bei dem verschiedene Hypothesen über eine zukünftige Situation erzeugt werden. Durch die Spracherkennung ist dem System bekannt, welche Hypothese vom Lotsen umgesetzt wird. Daraufhin kann das System verbesserte Planungen für die weitere Zukunft erstellen.

Die Erfindung wird anhand der beigefügten Zeichnungen beispielhaft näher erläutert. Es zeigen:
- Figur 1 -: schematische Darstellung des erfindungsgemäßen Assistenzsystems;
- Figur 2 -: schematische Darstellung einer Regungskette bei der Fluglotsenunterstützung.

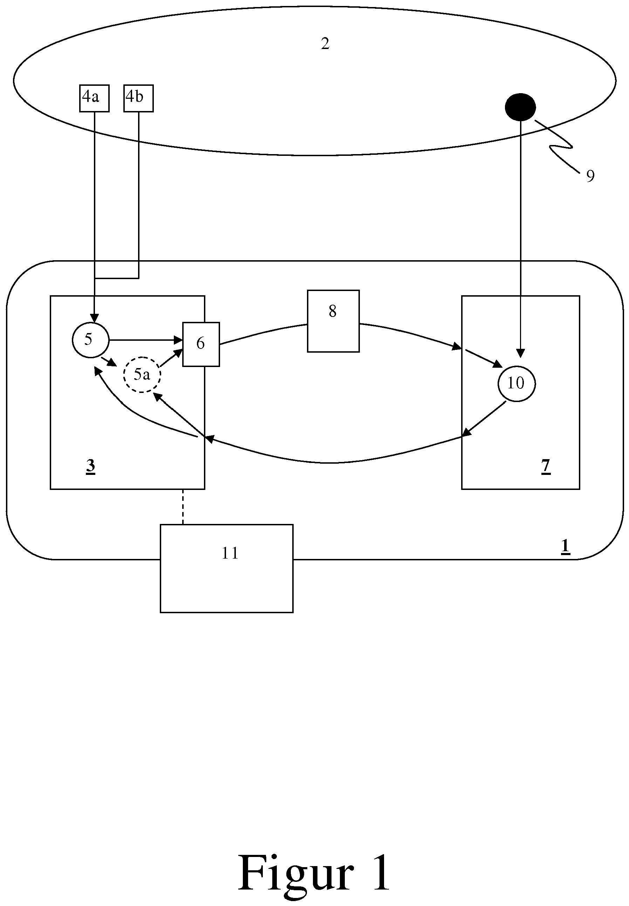

Figur 1 zeigt schematisch das erfindungsgemäße Assistenzsystem 1, das zur Unterstützung von Planungs- und/oder Führungsaufgaben einer Regelstrecke 2 Anwendung finden kann. Eine Regelstrecke 2 kann beispielsweise der Landeanflug von Flugzeugen auf einem Flughafen sein, der in der Regel von Lotsen überwacht und geregelt wird.

Das Assistenzsystem 1 weist eine Zustandserfassungseinheit 3 auf, die mit Hilfe von Sensoren 4a, 4b Daten über die Regelstrecke 2 erfasst und daraus einen aktuellen Zustand 5 der Regelstrecke 2 ermittelt. Aus diesem aktuellen Zustand 5 der Regelstrecke 2 lässt sich über vorgegebene Ziele durch die Planungskomponente des Assistenzsystems ein prognostizierter Zustand 5a ableiten, der eine zukünftige Entwicklung des Zustandes 5 der Regelstrecke 2 berücksichtigt.

Sowohl der aktuelle Zustand 5 als auch ein möglicherweise abgeleiteter und prognostizierter Zustand 5a dienen in einer Kontextermittlungseinheit 6 als Grundlage für die Ermittlung eines Sprachkontextes, der als Eingabe in den Spracherkenner bzw. die Sprachverarbeitungseinheit 7 vorgesehen ist. Denn aufgrund der Kenntnis des aktuellen Zustandes 5 bzw. eines prognostizierten Zustandes 5a, die sich letztendlich aus den Sensordaten der Regelstrecke 2 sowie aus der Handlungsplanung des Assistenzsystems (Hypotheseneinheit) ableiten lassen, liegt der Zustandserfassungseinheit somit letztendlich auch der Kontext vor, der dem Spracherkenner 7 als Grundlage für die Spracherkennung dienen soll. Dadurch kann die Genauigkeit bei der Erkennung wesentlich erhöht werden.

Darüber hinaus kann zusätzlich eine Sprachhypotheseneinheit 8 vorgesehen sein, die aus dem aktuellen Zustand 5 oder prognostizierten Zustand 5a Sprachhypothesen bezüglich zukünftiger eventuell auftretender Sprachinformationen ermitteln kann. Die Sprachhypotheseneinheit 8 kann dabei Bestandteil der Zustandserfassungseinheit 3 oder der Sprachverarbeitungseinheit 7 sein. Der von der Kontextermittlungseinheit 6 ermittelte Sprachkontext kann somit um die Sprachhypothesen der Hypotheseneinheit 8 erweitert werden.

Sowohl der von der Kontextermittlungseinheit 6 ermittelte Sprachkontext als auch die Sprachhypothesen werden über einen Eingang der Sprachverarbeitungseinheit 7 in diese übertragen und eingespeist. Des Weiteren ist das Assistenzsystem 1 mit einer akustischen Aufnahmeeinheit 9 verbunden, die ebenfalls mit einem Eingang der Sprachverarbeitungseinheit 7 signaltechnisch verbunden ist. Die akustische Aufnahmeeinheit 9 ist dabei derart eingerichtet, dass sie akustische Sprachsignale in einer Sprachkommunikation zwischen mindestens zwei Personen (nicht dargestellt) aufnimmt, wodurch die akustische Aufnahmeeinheit 9 ein weiterer Sensor bzw. eine weitere Sensorik zur Zustandserfassung der Regelstrecke 2 darstellt. Die akustische Aufnahmeeinheit 9 kann dabei in einem einfachsten Fall ein Mikrofon sein, welches die Kommunikation zwischen zwei oder mehreren Personen mithört. Die akustische Aufnahmeeinheit 9 kann aber auch eine elektrische Vorrichtung sein, mit der Sprachsignale aus einem elektrischen Signal, wie sie beispielsweise bei einer Funkverbindung oder einer Telefonverbindung vorliegt, abgegriffen werden können. Somit lassen sich auch Kommunikationen zwischen Personen mithören, die über eine Fernsprecheinrichtung miteinander kommunizieren.

Die von der akustischen Aufnahmeeinheit 9 aufgenommenen Sprachsignale werden nun durch die Sprachverarbeitungseinheit 7 unter Berücksichtigung des ermittelten Sprachkontextes und der ermittelten Sprachhypothesen analysiert und die in den akustischen Signalen enthaltenen Sprachinformationen 10 erkannt. Aufgrund der Tatsache, dass der Kontext für die Spracherkennung aus der Regelstrecke, der Planung (Hypotheseneinheit) und den erfassten Zuständen 5, 5a direkt oder indirekt ableitbar ist, lässt sich die Spracherkennung der erfassten akustischen Sprachsignale wesentlich erhöhen. Bei dieser kontextbasierten Spracherkennung wird nicht nur das aktuelle Sprachsignal, sondern auch der Kontext, der von einer externen Quelle kommt, zur Spracherkennung herangezogen. Dies ist zwar aufwändiger, aber auch leistungsfähiger, da dadurch der Suchraum entweder regelbasiert oder probabilistisch eingeschränkt wird. Da der erfasste Zustand eine Vielzahl von Daten und Parametern über die Regelstrecke 2 umfasst, kann hier der für die Spracherkennung notwendige Kontext abgeleitet werden.

So wird vorteilhafterweise nur noch ein geringer Teil des Kontextes vom Spracherkenner selbst bestimmt, während der wesentliche Teil der Kontextinformation über die Zustanderfassungseinheit aus dem Zustand und den prognostizierten Zuständen, d.h. den Hypothesen über die zukünftigen Situationen, bestimmt werden. Der Gesamtkontext wird somit aus dem Systemzustand und dem Dialog zweier Kommunikationspartner abgeleitet. Diese redundante Bestimmung des Sprachkontextes ermöglicht es dem Spracherkenner, falsche Erkennungshypothesen, die mit der Kontextinformation nicht konsistent sind, frühzeitig zu verwerfen und damit Fehlerkennungen zu vermeiden, wodurch letztendlich die Erkennungsleistung wesentlich erhöht wird.

Der Gesamtkontext wird somit zum einen über ein erstes Sensor- und Planungssystem, welches den Systemzustand der Regelstrecke erfasst und prognostiziert, und über ein zweites Sensorsystem, welches die Sprachkommunikation zweier Kommunikationspartner erfasst, ermittelt, was die Spracherkennung selber wesentlich verbessert.

Die so erkannten Sprachinformationen werden nun wieder zurück an die Zustandserfassungseinheit 3 übertragen, wobei in Abhängigkeit der erkannten Sprachinformationen 10 der aktuelle Zustand 5 oder der prognostizierte Zustand 5a in Abhängigkeit dieser Sprachinformationen 10 angepasst wird. Denn wurde beispielsweise aus den Gesprächen zwischen den Personen erkannt, dass Änderungen innerhalb der Regelstrecke durchgeführt werden sollen, so dass sich der Zustand ändern wird, wobei diese Zustandsänderung noch nicht von der Sensorik 4a, 4b erfassbar ist, so kann der aktuelle Zustand 5 oder der für die Zukunft prognostizierte Zustand 5a aufgrund des Gespräches bereits angepasst werden, so dass das Assistenzsystem wesentlich genauere Informationen über die Regelstrecke 2 hat und somit entsprechende Handlungsempfehlungen, die an einer Ausgabeeinheit 11 ausgegeben werden können, wesentlich genauer sind.

So kann die Anpassung der Zustände 5, 5a durch die Zustandserfassungseinheit 3 beispielhaft derart erfolgen, dass bestimmte Parameter und/oder Daten, welche den Zustand der Regelstrecke 2 beschreiben, verändert werden, so dass sich für die Zustandserfassungseinheit 3 ein veränderter Zustand 5 bzw. 5a darstellt, der mit den von der Sensorik 4a, 4b sensierten Daten zumindest für einen Moment zwangsläufig nicht konsistent sein muss.

Das Assistenzsystem kann neben den beschriebenen Einheiten weitere Einheiten aufweisen, die beispielsweise bestimmte Regelungen für die Regelstrecke 2 vorsehen bzw. entsprechende Handlungsinformationen oder Handlungsempfehlungen über die Ausgabeeinheit 11 ausgeben können. Beispielhaft sei hier ein Lotsenunterstützungssystem genannt, das ebenfalls in das Assistenzsystem 1 eingebettet und dem Lotsen bei seiner Regelungs- und Führungsaufgabe unterstützen soll. Durch die Anpassung der erfassten Zustände bzw. prognostizierten Zustände der Regelstrecke 2 kann dem Lotsenunterstützungssystem eine wesentlich bessere Grundlage für seine Berechnungen und Handlungsempfehlungen gegeben werden, was die Akzeptanz und Sicherheit erhöht.

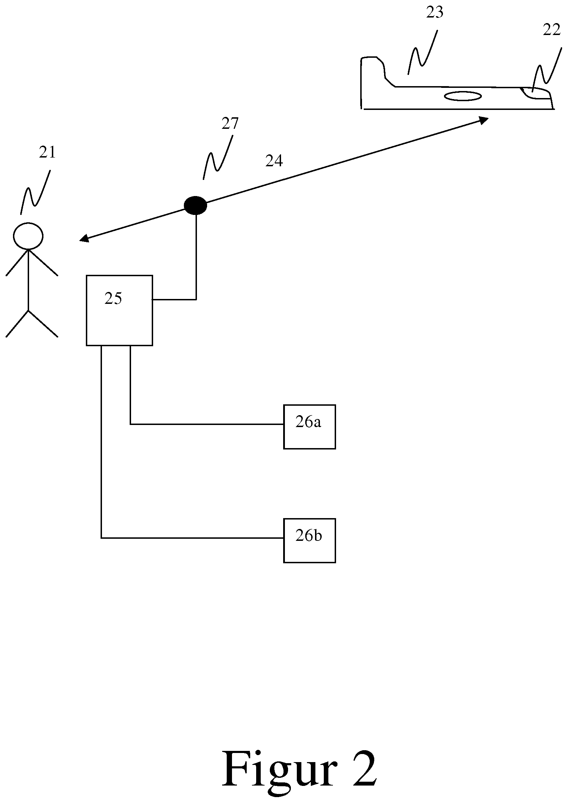

Ein derartiges System zeigt Figur 2 beispielhaft für die Regelstrecke bei der Führung eines Flugzeuges durch einen Lotsen 21. Der Fluglotse 21, der sich in der Regel im Kontrollzentrum oder im Tower des Flughafens aufhält, steht mit dem Piloten 22 eines Flugzeuges 23 in Funkverbindung. Der Fluglotse 21 erteilt über die Funkverbindung 24 dem Piloten 22 des Flugzeuges 23 entsprechende Anweisungen, damit der Pilot 22 das Flugzeug 23 auf einer vorbestimmten Trajektorie auf dem Flughafen landen kann.

Seit einiger Zeit sind zur Unterstützung des Lotsen 21 sogenannte Lotsenunterstützungssysteme 25 bekannt, die dem Lotsen in Abhängigkeit von der aktuellen Situation im Luftraum des Flughafens verschiedene Vorschläge für die Landesequenzen und/oder für Flugführungsanweisungen für die Flugzeuge liefern können. Mit Hilfe von Sensoren 26a, 26b, die beispielsweise Radarsensoren sein können und somit kontinuierlich Radardaten an das Lotsenunterstützungssystem 25 liefern, kann eine Situation innerhalb des Flugraumes bzw. ein Zustand für den Lotsen aufgebaut werden, um die Flugzeuge sicher auf dem Flughafen landen zu lassen. Diese Daten liefern dem Lotsenunterstützungssystem 25 aber auch die Grundlage für die Vorschläge der Landesequenzen und/oder Führungsanweisungen an die Flugzeuge.

Verändert der Lotse 21 jedoch seine Strategie, so merkt das System 25 solange nichts, bis eindeutige Hinweise in den Radardaten hinsichtlich eines abweichenden Flugverhaltens vorliegen und erkannt wurden. Dies kann jedoch bis zu 30 Sekunden und mehr dauern, so dass während dieser Zeit die dargestellte Situation bzw. der erfasste Zustand über die Regelstrecke und die von dem System 25 gelieferten Vorschläge mit der eigentlichen Situation bzw. dem eigentlichen Zustand nicht konsistent sind. Diese mangelnde Übereinstimmung zwischen der Lotsenabsicht und dem maschinellen Situationsbewusstsein des Unterstützungssystems 25 führt jedoch zu eingeschränkten Vorschlägen, die letztendlich für eine mangelnde Akzeptanz des Systems bei den Lotsen sorgen.

Um dieses Problem zu lösen, befindet sich in der Kommunikationsverbindung 24 zwischen Lotse 21 und Pilot 22 eine akustische Aufnahmeeinheit 27, die mit dem System 25 kommunikativ in Verbindung steht. Die Sprachkommunikation zwischen dem Lotsen 21 und dem Piloten 22 über die Kommunikationsverbindung 24 wird daher mit Hilfe der akustischen Aufnahmeeinheit 27 abgegriffen und dem System 25 zur Verfügung gestellt.

Werden von dem Lotsen 21 nun von der eigentlichen Strategie veränderte Flugführungsanweisungen an den Piloten 22 über die Kommunikationsverbindung 24 übertragen, so wird dies von der akustischen Aufnahmeeinheit 27 erfasst. Diese über die Kommunikationsverbindung 24 übertragenen Sprachanweisungen stellen dabei den frühest möglichen Zeitpunkt zur Erkennung einer Strategieänderung des Lotsen 21 bei der Verkehrssteuerung dar. Mittels eines Assistenzsystems, wie in Figur 1 beschrieben, das Bestandteil des Systems 25 ist, können die Sprachinformationen bezüglich der Regelstrecke erkannt werden, wobei die von dem System 25 erfassten Zustände sowie deren weitere Prognose auf Basis im Assistenzsystem durchgeführter alternativer Planungen basierend auf verschiedenen Strategien den Kontext für die Spracherkennung liefert. Die über die Kommunikationsverbindung 24 erkannten Sprachinformationen der betreffenden Person 21 und 22 können dann dazu genutzt werden, die von dem System 25 erfassten Zustände anzupassen, um so die Strategieänderung des Lotsen 21 bei der Ausgabe von entsprechenden Vorschlägen zur Flugführung mit berücksichtigen zu können, obwohl die veränderten Zustände erst einige Zeit später über die Radarsensoren 26a, 26b detektierbar werden. Der Lotse verfolgt z.B. zunächst die Strategie 1 und schwenkt dann auf eine Strategie 2 um. Dies wird erkannt, weil es Planungen für beide Strategien gibt. Da aber vom System nicht alle möglichen Planungen angezeigt werden, ist nach außen zum Lotsen nur Strategie 1 des Systems zu erkennen, obwohl mehr als eine Strategie berechnet wird.

Die Berechnungen des Systems schwenken nun auf die Strategie 2 als erstrangige Strategie um, die ausgegeben und tiefergehend bearbeitet wird. Da auf diese Planänderung durch den Lotsen unmittelbar durch das System 25 durch Verbesserung der eigenen Planung reagiert wird, bekommt der Lotse sofort einen Eindruck davon, welche weiteren Auswirkungen durch die von ihm veranlassten Aktionen ausgelöst werden. Dies ist insbesondere in Situationen mit hohem Verkehrsaufkommen hilfreich, da in solchen Situationen die Belastung ohnehin für den Lotsen hoch ist. Durch die höhere Konfidenz auf der Systemseite hinsichtlich der erwarteten Entwicklung der zukünftigen Situation besteht nun zusätzlich die Möglichkeit, den Lotsen auf Abweichungen des Flugzeuges von der geplanten Trajektorie hinzuweisen. Dabei erfolgt die Anpassung der Situation durch den Lotsen derart, dass dieser keine weiteren Eingaben an das System 25 vornehmen muss, wie beispielsweise durch Eingeben von entsprechenden Anweisungen oder durch direkten Sprachbefehl. Vielmehr erfolgt die Anpassung unter den Umständen der ganz normalen Arbeitsabläufe der Lotsen 21. Dies stellt einen deutlichen Vorteil des Systems 25 zu heutigen Systemen dar, und da das vorliegende System schon zu einem Zeitpunkt warnen kann, in dem bisherige System noch Strategieänderungen versuchen zu detektieren.

## Patentansprüche

1. Lotsenunterstützungssystem (1, 25) zur Unterstützung eines Lotsen bei situationsabhängigen Planungs- und/oder Führungsaufgaben einer Regelstrecke (2) bei der Führung eines Flugzeuges durch einen Lotsen (21), wobei das Lotsenunterstützungssystem dem Lotsen in Abhängigkeit von der aktuellen Situation im Luftraum des Flughafens verschiedene Vorschläge für Flugführungsanweisungen für die Flugzeuge liefert mit
- einer Zustandserfassungseinheit (3) zum Erfassen zumindest eines Zustandes (5, 5a) der Regelstrecke (2), wobei die Erfassung des Zustandes der Regelstrecke durch ein mit der Zustandserfassungseinheit in Verbindung stehenden ersten Sensorsystem erfolgt,
- einer akustischen Aufnahmeeinheit (9, 27), die zum Aufnehmen von akustischen Sprachsignalen einer Sprachkommunikation (24) zwischen einem Piloten (22) eines Flugzeuges (23) und einem Lotsen (21) ausgebildet ist, und
- einer Sprachverarbeitungseinheit (7), die zum Erkennen von Sprachinformationen (10) bezüglich der Regelstrecke (2) aus den aufgenommenen akustischen Sprachsignalen eingerichtet ist,
**dadurch gekennzeichnet, dass** die Zustandserfassungseinheit (3) zum Anpassen des erfassten Zustandes (5) und/oder eines aus dem aktuellen Zustand ableitbaren prognostizierten Zustandes (5a) der Regelstrecke (2) in Abhängigkeit von den erkannten Sprachinformationen (10) eingerichtet ist, wobei die akustische Aufnahmeeinheit in Verbindung mit der Sprachverarbeitungseinheit ein weiteres, zweites Sensorsystem für die Erfassung oder Prognose des Zustandes der Regelstrecke bilden,
und eine Sprachhypotheseneinheit (8) vorgesehen ist, die zum Ermitteln von Sprachhypothesen bezüglich zukünftig erwarteter Sprachinformationen in Abhängigkeit von dem erfassten Zustand (5) und/oder einem aus dem aktuellen Zustand ableitbaren prognostizierten Zustand (5a) ausgebildet ist, wobei die Sprachverarbeitungseinheit (7) zum Erkennen der Sprachinformationen (10) bezüglich der Regelstrecke (2) aus den aufgenommenen akustischen Sprachsignalen unter Berücksichtigung der ermittelten Sprachhypothesen eingerichtet ist, wobei dem Lotsenunterstützungssystem die Anpassungen der erfassten Zustände bzw. prognostizierten Zustände der Regelstrecke als Grundlage für seine Berechnungen und Handlungsempfehlungen gegeben werden.

2. Lotsenunterstützungssystem (1, 25) nach Anspruch 1, **dadurch gekennzeichnet, dass** die Sprachhypotheseneinheit (8) zum Zuordnen von Eintrittswahrscheinlichkeiten zu den ermittelten Sprachhypothesen und die Sprachverarbeitungseinheit (7) zum Erkennen der Sprachinformationen (10) weiterhin unter Berücksichtigung der den Sprachhypothesen zugeordneten Eintrittswahrscheinlichkeiten eingerichtet ist.

3. Lotsenunterstützungssystem (1, 25) nach Anspruch 1 oder 2, **dadurch gekennzeichnet, dass** eine Kontextermittlungseinheit (6) vorgesehen ist, die zum Ermitteln eines Sprachkontextes in Abhängigkeit von dem erfassten Zustand (5) und/oder einem aus dem aktuellen Zustand ableitbaren prognostizierten Zustand (5a) ausgebildet ist, wobei die Sprachverarbeitungseinheit (7) zum Erkennen der Sprachinformationen (10) bezüglich der Regelstrecke (2) aus den aufgenommenen akustischen Sprachsignalen unter Berücksichtigung des ermittelten Sprachkontext eingerichtet ist.

4. Lotsenunterstützungssystem (1, 25) nach einem der vorhergehenden Ansprüche, **dadurch gekennzeichnet, dass** die akustische Aufnahmeeinheit (9, 27) zum Empfangen von elektrischen Signalen in einer elektrischen Sprach-Kommunikationsverbindung (24) und zum Aufnehmen der akustischen Sprachsignale aus den empfangenen elektrischen Signalen eingerichtet ist.

5. Lotsenunterstützungssystem (1, 25) nach einem der vorhergehenden Ansprüche, **dadurch gekennzeichnet, dass** das Assistenzsystem (1, 25) eine Ausgabeeinheit (11) zum Ausgeben von in Abhängigkeit von dem erfassten Zustand (5) und/oder einem aus dem aktuellen Zustand ableitbaren prognostizierten Zustand (5a) generierten Unterstützungsanweisungen zum Unterstützen der situationsabhängigen Planungs- und/oder Führungsaufgabe der Regelstrecke (2) aufweist.

6. Lotsenunterstützungssystem (1, 25) nach einem der vorhergehenden Ansprüche, **dadurch gekennzeichnet, dass** das Assistenzsystem zum Ermitteln von Handlungsoptionen zur Unterstützung der situationsabhängigen Planungs- und/oder Führungsaufgabe der Regelstrecke in Abhängigkeit von dem erfassten Zustand (5) und/oder einem aus dem aktuellen Zustand ableitbaren prognostizierten Zustand (5a) der Regelstrecke (2) eingerichtet ist, wobei die Sprachhypotheseneinheit ausgebildet ist, die Sprachhypothesen bezüglich zukünftig erwarteter Sprachinformationen in Abhängigkeit von aus dem erfassten Zustand und/oder dem prognostizierten Zustand ermittelten Handlungsoptionen zu ermitteln.

7. Lotsenunterstützungssystem (1, 25) nach Anspruch 6, **dadurch gekennzeichnet, dass** das Assistenzsystem zum Ermitteln der Handlungsoptionen zur Unterstützung der situationsabhängigen Planungs- und/oder Führungsaufgabe der Regelstrecke weiterhin in Abhängigkeit von den erkannten Sprachinformationen (10) eingerichtet ist.

8. Verfahren zur Unterstützung bei situationsabhängigen Planungs- und/oder Führungsaufgaben einer Regelstrecke bei der Führung eines Flugzeuges durch einen Lotsen, wobei dem Lotsen in Abhängigkeit von der aktuellen Situation im Luftraum des Flughafens verschiedene Vorschläge für Flugführungsanweisungen für die Flugzeuge durch ein Lotsenunterstützungssystem geliefert werden, mit den Schritten:
- Erfassen zumindest eines Zustandes der Regelstrecke durch eine Zustandserfassungseinheit, wobei die Erfassung des Zustandes der Regelstrecke durch ein mit der Zustandserfassungseinheit in Verbindung stehenden ersten Sensorsystem erfolgt,
- Aufnehmen von akustischen Sprachsignalen einer Sprachkommunikation zwischen einem Piloten eines Flugzeuges und einem Lotsen durch eine akustische Aufnahmeeinheit,
- automatisiertes Erkennen von Sprachinformationen bezüglich der Regelstrecke aus den aufgenommenen akustischen Sprachsignalen durch eine Sprachverarbeitungseinheit,
**gekennzeichnet durch**
- Anpassen des erfassten Zustandes und/oder eines aus dem aktuellen Zustand ableitbaren prognostizierten Zustandes der Regelstrecke in Abhängigkeit von den erkannten Sprachinformationen durch die Zustandserfassungseinheit, wobei die akustische Aufnahmeeinheit in Verbindung mit der Sprachverarbeitungseinheit ein weiteres, zweites Sensorsystem für die Erfassung oder Prognose des Zustandes der Regelstrecke bilden,
- automatisiertes Ermitteln von Sprachhypothesen bezüglich zukünftig erwarteter Sprachinformationen in Abhängigkeit von dem erfassten Zustand und/oder einem aus dem aktuellen Zustand ableitbaren prognostizierten Zustand durch eine Sprachhypotheseneinheit und
- automatisiertes Erkennen der Sprachinformationen bezüglich der Regelstrecke aus den aufgenommenen akustischen Sprachsignalen unter Berücksichtigung der ermittelten Sprachhypothesen durch die Sprachverarbeitungseinheit,
wobei dem Lotsenunterstützungssystem die Anpassungen der erfassten Zustände bzw. prognostizierten Zustände der Regelstrecke als Grundlage für seine Berechnungen und Handlungsempfehlungen gegeben werden.

9. Verfahren nach Anspruch 8, **gekennzeichnet durch** Zuordnen von Eintrittswahrscheinlichkeiten zu den ermittelten Sprachhypothesen durch die Sprachhypotheseneinheit und Erkennen der Sprachinformationen weiterhin unter Berücksichtigung der den Sprachhypothesen zugeordneten Eintrittswahrscheinlichkeiten durch die Sprachverarbeitungseinheit.

10. Verfahren nach Anspruch 8 oder 9, **gekennzeichnet durch**
- automatisiertes Ermitteln eines Sprachkontext in Abhängigkeit von dem erfassten Zustand und/oder einem aus dem aktuellen Zustand ableitbaren prognostizierten Zustand durch eine Kontextermittlungseinheit und
- automatisiertes Erkennen der Sprachinformationen bezüglich der Regelstrecke aus den aufgenommenen akustischen Sprachsignalen unter Berücksichtigung des ermittelten Sprachkontext durch die Sprachverarbeitungseinheit.

11. Verfahren nach einem der Ansprüche 8 bis 10, **gekennzeichnet durch** Empfangen von elektrischen Signalen aus einer elektrischen Sprachkommunikationsverbindung und Aufnehmen der akustischen Sprachsignale aus den empfangenen elektrischen Signalen durch die Aufnahmeeinheit.

12. Verfahren nach einem der Ansprüche 8 bis 11, **gekennzeichnet durch** Ermitteln von Handlungsoptionen zur Unterstützung der situationsabhängigen Planungs- und/oder Führungsaufgabe der Regelstrecke in Abhängigkeit von dem erfassten Zustand (5) und/oder einem aus dem aktuellen Zustand ableitbaren prognostizierten Zustand (5a) der Regelstrecke (2) durch das Assistenzsystem und Ermitteln der Sprachhypothesen bezüglich zukünftig erwarteter Sprachinformationen in Abhängigkeit von aus dem erfassten Zustand und/oder prognostizierten Zustand ermittelten Handlungsoptionen durch die Sprachhypotheseneinheit.

13. Verfahren nach Anspruch 12, **gekennzeichnet durch** Ermitteln der Handlungsoptionen zur Unterstützung der situationsabhängigen Planungs- und/oder Führungsaufgabe der Regelstrecke weiterhin in Abhängigkeit von den erkannten Sprachinformationen durch das Assistenzsystem.

14. Computerprogramm mit Programmcodemitteln, insbesondere auf einem maschinenlesbaren Träger gespeichert, eingerichtet zur Durchführung des Verfahrens nach einem der Ansprüche 8 bis 13, wenn das Computerprogramm auf einem Rechner ausgeführt wird.

## Claims

1. Air traffic controller support system (1, 25) for support of an air traffic controller in situation-dependent planning and/or management tasks of a controlled system (2) for the management of an aircraft by an air traffic controller (21), wherein the air traffic controller support system provides the air traffic controller with various suggestions for air traffic management instructions for the aircraft depending on the present situation in the air space of the airport, comprising
- a state detection unit (3) for detecting at least one state (5, 5a) of the controlled system (2), wherein the detection of the state of the controlled system is performed by a first sensor system which is connected to the state detection unit,
- an acoustic recording unit (9, 27), which is designed for recording acoustic voice signals of a voice communication (24) between a pilot (22) of an aircraft (23) and an air traffic controller (21), and
- a voice processing unit (7), which is set up to identify voice information items (10) in relation to the controlled system (2) from the recorded acoustic voice signals,
**characterized in that** the state detection unit (3) is set up to match the detected state (5) and/or a projected state (5a), derivable from the present state, of the controlled system (2) depending on the identified voice information items (10), wherein the acoustic recording unit in conjuction with the voice processing unit form a further, second sensor system for the detection or prediction of the state of the controlled system, and a voice hypothesis unit (8) is provided, which is designed to determine voice hypotheses in relation to voice information items expected in the future depending on the detected state (5) and/or a predicted state (5a), derivable from the present state, wherein the voice processing unit (7) is set up to identify the voice information items (10) in relation to the controlled system (2) from the recorded acoustic voice signals taking into consideration the determined voice hypotheses, wherein the matches of the detected states or predicted states of the controlled system are provided to the air traffic controller support system as a basis for its calculations and action recommendations.

2. Air traffic controller support system (1, 25) according to Claim 1, **characterized in that** the voice hypothesis unit (8) is set up to assign probabilities of occurrence to the determined voice hypotheses, and the voice processing unit (7) is set up to identify the voice information items (10) further taking into consideration the probabilities of occurrence assigned to the voice hypotheses.

3. Air traffic controller support system (1, 25) according to Claim 1 or 2, **characterized in that** a context determination unit (6) is provided, which is designed to determine a voice context depending on the detected state (5) and/or a predicted state (5a), derivable from the present state, wherein the voice processing unit (7) is set up to identify the voice information items (10) in relation to the controlled system (2) from the recorded acoustic voice signals taking into consideration the determined voice context.

4. Air traffic controller support system (1, 25) according to one of the preceding claims, **characterized in that** the acoustic recording unit (9, 27) is set up to receive electrical signals in an electrical voice communication link (24) and to record the acoustic voice signals from the received electrical signals.

5. Air traffic controller support system (1, 25) according to one of the preceding claims, **characterized in that** the assistance system (1, 25) has an output unit (11) for outputting support instructions generated depending on the detected state (5) and/or a predicted state (5a), derivable from the present state, for supporting the situation-dependent planning and/or management task of the controlled system (2).

6. Air traffic controller support system (1, 25) according to one of the preceding claims, **characterized in that** the assistance system is set up to determine action options for supporting the situation-dependent planning and/or management task of the controlled system depending on the detected state (5) and/or a predicted state (5a), derivable from the present state, of the controlled system (2), wherein the voice hypothesis unit is designed to determine the voice hypotheses in relation to voice information items expected in the future depending on action options determined from the detected state and/or the predicted state.

7. Air traffic controller support system (1, 25) according to Claim 6, **characterized in that** the assistance system is set up to determine action options for supporting the situation-dependent planning and/or management task of the controlled system further depending on the identified voice information items (10).

8. Method for support in situation-dependent planning and/or management tasks of a controlled system for the management of an aircraft by an air traffic controller, wherein the air traffic controller is provided with various suggestions for air traffic management instructions for the aircraft by an air traffic controller support system depending on the present situation in the air space of the airport, comprising the following steps:
- detection of at least one state of the controlled system by a state detection unit, wherein the detection of the state of the controlled system is performed by a first sensor system which is connected to the state detection unit,
- recording of acoustic voice signals of a voice communication between a pilot of an aircraft and an air traffic controller by an acoustic recording unit,
- automatic identification of voice information items in relation to the controlled system from the recorded acoustic voice signals by a voice processing unit,
**characterized by**
- matching of the detected state and/or a predicted state, derivable from the present state, of the controlled system depending on the identified voice information items by the state detection unit, wherein the acoustic recording unit in conjunction with the voice processing unit form a further, second sensor system for the detection or prediction of the state of the controlled system,
- automated determination of voice hypotheses in relation to voice information items expected in the future depending on the detected state and/or a predicted state, derivable from the present state, by a voice hypothesis unit, and
- automated identification of the voice information items in relation to the controlled system from the recorded acoustic voice signals taking into consideration the determined voice hypotheses by the voice processing unit,
wherein the matches of the detected states or predicted states of the controlled system are provided to the air traffic support system as a basis for its calculations and action recommendations.

9. Method according to Claim 8, **characterized by** assignment of probabilities of occurrence to the determined voice hypotheses by the voice hypothesis unit and identification of the voice information items further taking into consideration the probabilities of occurrence assigned to the voice hypotheses by the voice processing unit.

10. Method according to Claim 8 or 9, **characterized by**
- automated determination of a voice context depending on the detected state and/or a predicted state, derivable from the present state, by a context determination unit, and
- automated identification of the voice information items in relation to the controlled system from the recorded acoustic voice signals taking into consideration the determined voice context by the voice processing unit.

11. Method according to one of Claims 8 to 10, **characterized by** reception of electrical signals from an electrical voice communication link and recording of the acoustic voice signals from the received electrical signals by the recording unit.

12. Method according to one of Claims 8 to 11, **characterized by** determination of action options for supporting the situation-dependent planning and/or management task of the controlled system depending on the detected state (5) and/or a predicted state (5a), derivable from the present state, of the controlled system (2) by the assistance system and determination of the voice hypotheses in relation to voice information items expected in the future depending on action options determined from the detected state and/or predicted state by the voice hypothesis unit.

13. Method according to Claim 12, **characterized by** determination of the action options for supporting the situation-dependent planning and/or management task of the controlled system further depending on the detected voice information items by the assistance system.

14. Computer program having program code means, in particular stored on a machine-readable carrier, set up to implement the method according to one of Claims 8 to 13 when the computer program is run on a computer.

## Revendications

1. Système d'assistance au contrôleur (1, 25) destiné à assister un contrôleur lors de tâches de planification et/ou de guidage d'un trajet contrôlé (2) dépendantes de la situation lors du guidage d'un aéronef par un contrôleur (21), le système d'assistance au contrôleur délivrant au pilote différentes propositions pour des instructions de guidage de vol pour les aéronefs en fonction de la situation actuelle dans l'espace aérien de l'aéroport, comprenant
- une unité de capture d'état (3) destinée à capturer au moins un état (5, 5a) du trajet contrôlé (2), la capture de l'état du trajet contrôlé étant effectuée par un premier système de détection qui se trouve en liaison avec l'unité de capture d'état,
- une unité d'enregistrement sonore (9, 27) qui est configurée pour enregistrer des signaux vocaux sonores d'une communication vocale (24) entre un pilote (22) d'un aéronef (23) et un contrôleur (21), et
- une unité de traitement de la parole (7) qui est conçue pour reconnaître des informations vocales (10) concernant le trajet contrôlé (2) à partir des signaux vocaux sonores enregistrés,
**caractérisé en ce que** l'unité de capture d'état (3) est conçue pour adapter l'état capturé (5) et/ou un état prévisionnel (5a) pouvant être dérivé de l'état actuel du trajet contrôlé (2) en fonction des informations vocales (10) reconnues, l'unité d'enregistrement sonore formant, en association avec l'unité de traitement de la parole, un deuxième système de détection supplémentaire pour la capture ou la prévision de l'état du trajet contrôlé,
et il existe une unité d'hypothèse de parole (8) qui est configurée pour déterminer des hypothèses de parole concernant les futures informations vocales attendues en fonction de l'état capturé (5) et/ou d'un état prévisionnel (5a) pouvant être dérivé de l'état actuel, l'unité de traitement de la parole (7) étant conçue pour reconnaître les informations vocales (10) concernant le trajet contrôlé (2) à partir des signaux vocaux sonores enregistrés en tenant compte des hypothèses de parole déterminées, les adaptations des états capturés ou des états prévisionnels du trajet contrôlé étant communiquées au système d'assistance au contrôleur en tant que base pour ses calculs et ses recommandations de gestion.

2. Système d'assistance au contrôleur (1, 25) selon la revendication 1, **caractérisé en ce que** l'unité d'hypothèse de parole (8) est conçue pour associer des probabilités de pénétration aux hypothèses de parole déterminées et l'unité de traitement de la parole (7) pour reconnaître les informations vocales (10) également en tenant compte des probabilités de pénétration associées aux hypothèses de parole.

3. Système d'assistance au contrôleur (1, 25) selon la revendication 1 ou 2, **caractérisé en ce qu'**il existe une unité de détermination de contexte (6) qui est configurée pour déterminer un contexte de parole en fonction de l'état capturé (5) et/ou d'un état prévisionnel (5a) pouvant être dérivé de l'état actuel, l'unité de traitement de la parole (7) étant conçue pour reconnaître les informations vocales (10) concernant le trajet contrôlé (2) à partir des signaux vocaux sonores enregistrés en tenant compte du contexte de parole déterminé.

4. Système d'assistance au contrôleur (1, 25) selon l'une des revendications précédentes, **caractérisé en ce que** l'unité d'enregistrement sonore (9, 27) est conçue pour recevoir des signaux électriques dans une liaison de communication vocale électrique (24) et pour enregistrer les signaux vocaux sonores à partir des signaux électriques reçus.

5. Système d'assistance au contrôleur (1, 25) selon l'une des revendications précédentes, **caractérisé en ce que** le système d'assistance (1, 25) possède une unité de sortie (11) destinée à délivrer des instructions d'assistance générées en fonction de l'état capturé (5) et/ou d'un état prévisionnel (5a) pouvant être dérivé de l'état actuel en vue de l'assistance de la tâche de planification et/ou de guidage du trajet contrôlé (2) dépendante de la situation.

6. Système d'assistance au contrôleur (1, 25) selon l'une des revendications précédentes, **caractérisé en ce que** le système d'assistance est conçu pour déterminer des options de gestion en vue de l'assistance de la tâche de planification et/ou de guidage du trajet contrôlé dépendante de la situation en fonction de l'état capturé (5) et/ou d'un état prévisionnel (5a) pouvant être dérivé de l'état actuel du trajet contrôlé (2), l'unité d'hypothèse de parole étant configurée pour déterminer les hypothèses de parole concernant les futures informations vocales attendues en fonction d'options de gestion déterminées à partir de l'état capturé et/ou de l'état prévisionnel.

7. Système d'assistance au contrôleur (1, 25) selon la revendication 6, **caractérisé en ce que** le système d'assistance est conçu pour déterminer les options de gestion en vue de l'assistance de la tâche de planification et/ou de guidage du trajet contrôlé dépendante de la situation également en fonction des informations vocales (10) reconnues.

8. Procédé d'assistance lors de tâches de planification et/ou de guidage d'un trajet contrôlé dépendantes de la situation lors du guidage d'un aéronef par un contrôleur, différentes propositions pour des instructions de guidage de vol pour les aéronefs étant délivrées au contrôleur par un système d'assurance au contrôleur en fonction de la situation actuelle dans l'espace aérien de l'aéroport, comprenant les étapes suivantes :
- capture d'au moins un état du trajet contrôlé par une unité de capture d'état, la capture de l'état du trajet contrôlé étant effectuée par un premier système de détection qui se trouve en liaison avec l'unité de capture d'état,
- enregistrement de signaux vocaux sonores d'une communication vocale entre un pilote d'un aéronef et un contrôleur par une unité d'enregistrement sonore,
- reconnaissance automatique d'informations vocales concernant le trajet contrôlé à partir des signaux vocaux sonores enregistrés par une unité de traitement de la parole,
**caractérisé par**
- adaptation de l'état capturé et/ou d'un état prévisionnel pouvant être dérivé de l'état actuel du trajet contrôlé en fonction des informations vocales reconnues par l'unité de capture d'état, l'unité d'enregistrement sonore formant, en association avec l'unité de traitement de la parole, un deuxième système de détection supplémentaire pour la capture ou la prévision de l'état du trajet contrôlé,
- détermination automatisée par une unité d'hypothèse de parole d'hypothèses de parole concernant les futures informations vocales attendues en fonction de l'état capturé et/ou d'un état prévisionnel pouvant être dérivé de l'état actuel et
- reconnaissance automatisée par l'unité de traitement de la parole des informations vocales concernant le trajet contrôlé à partir des signaux vocaux sonores enregistrés en tenant compte des hypothèses de parole déterminées,
les adaptations des états capturés ou des états prévisionnels du trajet contrôlé étant communiquées au système d'assistance au contrôleur en tant que base pour ses calculs et ses recommandations de gestion.

9. Procédé selon la revendication 8, **caractérisé par** l'association de probabilités de pénétration aux hypothèses de parole déterminées par l'unité d'hypothèse de parole et reconnaissance des informations vocales également en tenant compte des probabilités de pénétration associées aux hypothèses de parole par l'unité de traitement de la parole.

10. Procédé selon la revendication 8 ou 9, **caractérisé par**
- détermination automatisée par une unité de détermination de contexte d'un contexte de parole en fonction de l'état capturé et/ou d'un état prévisionnel pouvant être dérivé de l'état actuel,
- reconnaissance automatisée par l'unité de traitement de la parole des informations vocales concernant le trajet contrôlé à partir des signaux vocaux sonores enregistrés en tenant compte du contexte de parole déterminé.

11. Procédé selon l'une des revendications 8 à 10, **caractérisé par** la réception de signaux électriques issus d'une liaison de communication vocale électrique et l'enregistrement des signaux vocaux sonores à partir des signaux électriques reçus par l'unité d'enregistrement sonore.

12. Procédé selon l'une des revendications 8 à 11, **caractérisé par** la détermination, par le système d'assistance, d'options de gestion en vue de l'assistance de la tâche de planification et/ou de guidage du trajet contrôlé dépendante de la situation en fonction de l'état capturé (5) et/ou d'un état prévisionnel (5a) pouvant être dérivé de l'état actuel du trajet contrôlé (2), et la détermination par l'unité d'hypothèse de parole des hypothèses de parole concernant les futures informations vocales attendues en fonction d'options de gestion déterminées à partir de l'état capturé et/ou de l'état prévisionnel.

13. Procédé selon la revendication 12, **caractérisé par** la détermination par le système d'assistance des options de gestion en vue de l'assistance de la tâche de planification et/ou de guidage du trajet contrôlé dépendante de la situation également en fonction des informations vocales reconnues.

14. Programme informatique comprenant des moyens de code de programme, notamment enregistrés sur un support lisible par machine, conçu pour mettre en oeuvre le procédé selon l'une des revendications 8 à 13 lorsque le programme informatique est exécuté sur un ordinateur.
